# EUROPÄISCHE PATENTANMELDUNG

(11) **EP 1 406 012 A1**
(43) Veröffentlichungstag der Anmeldung: **07.04.2004**
(21) Anmeldenummer: 03021887.9
(22) Anmeldetag: 27.09.2003
(51) Int. Cl.: F03D 11/00, F03D 7/02

(54) **Vorrichtung zur Lagerung des Maschinenkopfes einer Windenergieanlage auf dem Trägerturm**

(30) Priorität: 04.10.2002 DE 10246325
(71) Anmelder: Klinger, Friedrich, Prof. Dr.-Ing., 66119 Saarbrücken (DE)
(72) Erfinder: Klinger, Friedrich, Prof. Dr.-Ing., 66119 Saarbrücken (DE)
(74) Vertreter: Bernhardt, Winfrid, Dr.-Ing.

(57) **Zusammenfassung**

Die Erfindung betrifft eine Vorrichtung zur Lagerung des Maschinenkopfes einer Windenergieanlage auf dem Trägerturm, mit einem auf dem Turm (1) angeordneten Lager (9), auf dem der den Rotor (3) aufweisende Maschinenkopf (2) um eine vertikale Achse (6) drehbar ist, und mit einer Klemmeinrichtung zur Arretierung des Maschinenkopfes (2) am Trägerturm (1) in einer gewünschten Drehposition. Gemäß der Erfindung sind in der Art einer hydrostatischen Lagerung gebildete Einrichtungen mit einer Hochdruckpumpe für die Erzeugung eines Druckfluidfilms (22) zwischen den Klemmflächen der Klemmeinrichtung vorgesehen.

## Beschreibung

Die Erfindung betrifft eine Vorrichtung zur Lagerung des Maschinenkopfes einer Windenergieanlage auf dem Trägerturm, mit einem auf dem Turm angeordneten Lager, auf dem der den Rotor aufweisende Maschinenkopf um eine vertikale Achse drehbar ist, und mit einer Klemmeinrichtung zur Arretierung des Maschinenkopfes am Trägerturm in einer gewünschten Drehposition.

Zur Lagerung der Rotor-/Generatorbaugruppe bzw. Maschinenkopfes einer Windenergieanlage auf dem Trägerturm werden herkömmlich Wälz- oder Gleitlager eingesetzt, die in der Lage sind, am Maschinenkopf angreifende Kippmomente abzutragen. Solche Kippmomente ergeben sich einerseits durch die Last des seitlich von der Trägerturmspitze vorstehenden Maschinenkopfs. Andererseits sorgt der insbesondere an den Rotorblättern angreifende Wind für große horizontale Schubkräfte sowie Kippmomente um alle drei Kopfachsen. Der zur Anpassung an die Windrichtung durch eine Antriebseinrichtung drehbare Maschinenkopf ist nach einer Verdrehung in der neuen Drehposition wieder zu arretieren, wobei die Klemmeinrichtung ferner dazu dient, das auf dem Trägerturm angeordnete Drehlager zu entlasten und dadurch seinen Verschleiß gering zu halten. Die Klemmeinrichtung herkömmlicher Lagervorrichtungen umfasst eine mit dem Trägerturm verbundene Klemmscheibe, an welcher mit dem Maschinenkopf verbundene Klemmbacken in der Art einer Scheibenbremse angreifen. Solange der Maschinenkopf nicht gedreht wird, wirkt auf die Klemmbacken ständig ein Hydraulikdruck oder die Kraft einer Feder ein.

Aus der DE 199 62 978 C1 ist es bekannt, zur Lagerung des Maschinenkopfs auf dem Turm ein Gleitlager zu verwenden, welches den Maschinenkopf bezogen auf die Turmachse sowohl in radialer als auch axialer Richtung führt.

Der vorliegenden Erfindung liegt die Aufgabe zugrunde, eine neue Lagerungsvorrichtung der eingangs erwähnten Art zu schaffen, die gegenüber bekannten solchen Vorrichtungen bei gemindertem Verschleiß einen geringeren Wartungsaufwand erfordert.

Die diese Aufgabe lösende Vorrichtung nach der Erfindung ist gekennzeichnet durch in der Art einer hydrostatischen Lagerung gebildete Einrichtungen mit einer Hochdruckpumpe für die Erzeugung eines Druckfluidfilms zwischen den Klemmflächen der Klemmeinrichtung.

Gemäß der Erfindung sind während der Drehung des Maschinenkopfes die Klemmflächen der Klemmeinrichtung durch den Druckfluidfilm voneinander abgehoben und der Maschinenkopf dadurch leicht drehbar. Das durch die Hochdruckpumpe geförderte Druckmedium, vorzugsweise Öl, kann,einen zwischen den Klemmflächen der Klemmeinrichtung strömenden Flüssigkeitsfilm bilden. Die durch den Film voneinander abgehobenen Klemmflächen bewegen sich gegeneinander verschleiß- und reibungsfrei.

In der bevorzugten Ausführungsform der Erfindung umfasst die Klemmeinrichtung einen am Turm oder Kopf angebrachten Ring und gegen den Ring anliegende, mit dem Kopf bzw. Turm verbundene Klemmbacken, wobei über den Umfang des Rings eine Anzahl solcher Klemmbacken verteilt und in den gegen den Ring anliegenden Klemmflächen der Klemmbacken über eine Druckleitung mit der Hochdruckpumpe verbundene Taschen gebildet sind.

Greifen am Maschinenkopf Kippmomente an, so werden die über den Umfang des Rings verteilten Klemmbacken unterschiedlich belastet. Bei Anschluss der Taschen aller Klemmbacken an eine einzige Hochdruckpumpe kann sich im Falle besonders starker Belastung einzelner Klemmbacken während einer Drehung des Maschinenkopfes der Pumpendruck wegen der parallelen Anordnung der Druckleitungen nicht entsprechend erhöhen und die Druckfluidströmung durch die Taschen der betreffenden Klemmbacken käme zum Erliegen. Während es denkbar aber sehr aufwendig wäre, jedem Klemmbacken eine nur ihn versorgende Hochdruckpumpe zuzuordnen, sind in einer besonders bevorzugten Ausführungsform der Erfindung mehrere oder alle Klemmbacken jeweils über einen der Tasche vorgeordneten Strömungswiderstand mit einer einzigen Hochdruckpumpe verbunden. Ein Teil des durch die Hochdruckpumpe erzeugten Drucks fällt über dem vorgeordneten Strömungswiderstand ab. Je nach Belastung einzelner Klemmbacken und damit verbundener Änderung des Strömungswiderstandes zwischen der Tasche und der Außenumgebung ändert sich der Anteil des über dem vorgeordneten Strömungswiderstands abfallenden Drucks. Das heißt, der Druck in der Tasche passt sich der jeweiligen Belastung an.

Während es möglich wäre, vor einer Drehung des Kopfes die Verklemmung durch die Klemmeinrichtung aufzuheben oder wenigstens zu vermindern, arbeitet die Hochdruckpumpe in der bevorzugten Ausführungsform der Erfindung gegen die den Maschinenkopf arretierenden Klemmkräfte, die Aufhebung der Verklemmung erfolgt allein durch das Druckfluid. Nach Stillsetzung der Hochdruckpumpe liegen die Klemmkräfte automatisch wieder an. Zur Klemmkrafterzeugung können mechanische Spanneinrichtungen verwendet werden. Vorteilhaft liegt im Unterschied zum Stand der Technik an den Klemmbacken ein Druckfluid nur während der Drehung des Kopfes und nicht während der länger andauernden Stillstandszeiten an.

Während es denkbar ist, die Klemmeinrichtung zum Arretieren des Maschinenkopfs in Kombination mit einem das eingangs genannte Drehlager bildenden Wälz- oder Gleitlager einzusetzen, ist in der bevorzugten Ausführungsform der Erfindung das Drehlager des Maschinenkopfes ausschließlich durch den Ring und die während der Drehung des Maschinenkopfs hydrostatisch entlasteten Klemmbacken selbst gebildet. Der Maschinenkopf lässt sich so vollkommen reibungsfrei auf dem Turm lagern. Die Konstruktion von Kopf und Turm ist vereinfacht.

Der Querschnitt der dem Ring zugewandten Öffnung der Taschen oder/und die Größe der Klemmflächen könnte über den Umfang des Rings variieren, um dem Kippmoment Rechnung zu tragen, das durch den seitlichen Überhang des Kopfes erzeugt wird und ständig wirksam ist.

Klemmbacken können an beiden Stirnseiten des Rings zangenartig in der Art einer Scheibenbremse oder nur auf einer Stirnseite des Rings angreifen. Insbesondere können die Klemmbacken zangenartig gegen konische Flächen des Rings anliegen. Vorteilhaft bilden in letzterem Fall der Ring und die hydrostatisch entlasteten Klemmbacken ein Gleitlager, in welchem der Maschinenkopf sowohl axial als auch radial geführt ist.

In der bevorzugten Ausführungsform der Erfindung sind zur Bildung der Klemmbacken ein mit dem Maschinenkopf oder Turm verbundener zweiter Ring und an dem zweiten Ring die Klemmflächen bildende Beläge, vorzugsweise aus einem Material mit hohem Haftreibungskoeffizienten, sowie eine den zweiten Ring gegen den ersten Ring drückende Spanneinrichtung vorgesehen. Vorzugsweise ist der zweite Ring einstückig mit einem tragenden Gehäuse des Maschinenkopfs verbunden und flanschartig an einer der Turmspitze zugewandten Öffnung des Maschinenkopfs ausgebildet.

Auf der dem zweiten Ring abgewandten Seite des ersten Rings kann ein dritter, durch die Spanneinrichtung gegen den ersten Ring gedrückter Ring angeordnet sein. Dieser dritte Ring lässt sich mit Belägen zur Bildung weiterer Klemmbacken versehen, wobei die Klemmbacken des zweiten und dritten Rings zangenartig an dem ersten Ring angreifen. Alternativ kann der dritte Ring über ein Wälz- oder Gleitlager auf dem ersten Ring gelagert sein. Anstelle des durchgehenden dritten Rings können auch Ringsegmente verwendet werden.

Alternativ zu den Ringen lassen sich als Träger für Klemmbacken von einem tragenden Gehäuse des Maschinenkopfs oder von der Turmwand vorstehende Fußteile bilden, die lösbar mit dem Gehäuse oder derTurmwand verbunden und unter Minderung des Wartungsaufwandes einzeln austauschbar sind. Solche Fußteile könnten auch mit einem dem zweiten oder/und dritten Ring entsprechenden Ring verbunden sein.

Die genannte Spanneinrichtung kann den zweiten und dritten Ring verbindende Schrauben aufweisen. Bei einseitiger Anlage von Klemmbacken gegen den ersten Ring kommt als Spanneinrichtung ein den Maschinenkopf und Turm zusammenziehendes Zugspannglied in Betracht, das am Maschinenkopf oder Turm um die Drehachse des Maschinenkopfs drehbar gelagert und z.B. durch einen Bolzen oder ein Zugseil gebildet ist.

In weiterer vorteilhafter Ausgestaltung der Erfindung kann eine, vorzugsweise ringförmige, Auffangrinne für das durch die Hochdruckpumpe geförderte Druckfluid gebildet sein, welche Bestandteil eines Druckfluidkreislaufs ist.

Vorteilhaft kann das in einem Kreislauf umgeführte Druckfluid ferner zur Schmierung eines Drehantriebs für den Maschinenkopf dienen.

Die Erfindung soll nun anhand von Ausführungsbeispielen und der beiliegenden, sich auf diese Ausführungsbeispiele beziehenden Zeichnungen näher erläutert werden. Es zeigen:
- Fig. 1: eine für den Einsatz einer Lagervorrichtung nach der Erfindung vorgesehene Windenergieanlage in einer Teilansicht,
- Fig. 2: eine geschnittene Teilansicht einer Lagervorrichtung gemäß einem ersten Ausführungsbeispiel für die vorliegende Erfindung,
- Fig. 3: eine Detailansicht der Vorrichtung von Fig. 2,
- Fig. 4: eine geschnittene Ansicht einer Lagervorrichtung gemäß einem zweiten Ausführungsbeispiel für die vorliegende Erfindung,
- Fig. 5: eine die Funktion der Lagervorrichtung von Fig. 4 erläuternde Darstellung,
- Fig. 6: eine geschnittene Teilansicht einer Lagervorrichtung gemäß einem dritten Ausführungsbeispiel für die vorliegende Erfindung,
- Fig. 7: eine geschnittene Teilansicht einer Lagervorrichtung gemäß einem vierten Ausführungsbeispiel für die vorliegende Erfindung, und
- Fig. 8: eine geschnittene Ansicht einer Lagervorrichtung gemäß einem fünften Ausführungsbeispiel für die vorliegende Erfindung.

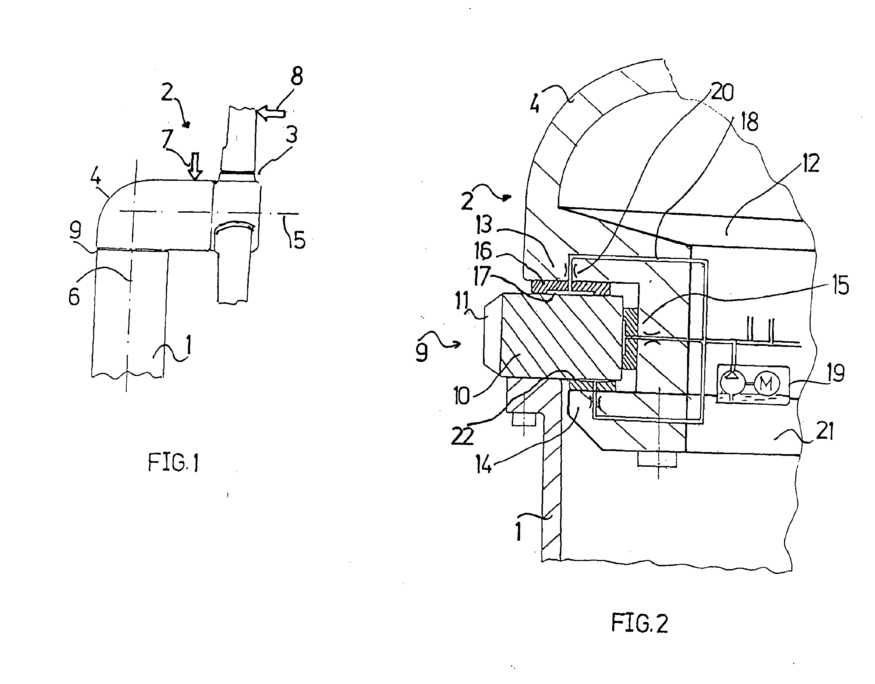

Es wird zunächst auf die Fig. 1 bis 3 Bezug genommen, wo mit dem Bezugszeichen 1 ein Turm einer Windenergieanlage bezeichnet ist. Der Turm 1 trägt einen Maschinenkopf 2 mit einem Windrotor 3 und einem tragenden Gehäuse 4. In dem Gehäuse 4 ist ein in den Fig. 1 bis 3 nicht gezeigter, durch den Windrotor 3 angetriebener Generator untergebracht. Der Windrotor 3 dreht sich um eine horizontale Achse 5. Der Turm 1 ist um eine vertikale Achse 6 drehbar.

Pfeile 7 und 8 deuten an, dass ein bei 9 angeordnetes Drehlager Kippmomenten ausgesetzt ist, die einerseits von der Last des seitlich überhängenden Maschinenkopfes 2 und andererseits von Windkräften herrühren, die am Maschinenkopf horizontal angreifen.

Wie aus Fig. 2 hervorgeht, umfasst das Drehlager 9 einen mit dem Turm 1 verschraubten Ring 10 mit einer Außenzahnung 11. In die Außenzahnung 11 greift ein Zahnrad einer mit dem Gehäuse 4 des Maschinenkopfs 2 verbundenen, in Fig. 1 bis 3 nicht gezeigten Antriebseinrichtung für die Drehung des Kopfes 2 ein.

Über den Umfang des Rings 10 verteilt greifen am Ring 10 durch einen zweiten Ring 12 bzw. dritten Ring 21 und Reibbeläge 16 gebildete Klemmbacken 13 bis 15 an. In dem betreffenden Ausführungsbeispiel sind jeweils zwanzig Klemmbacken 13, 14 bzw. 15 gebildet.

Jeder der durch Verklebung mit dem betreffenden Ring befestigten Reibbeläge 16 weist eine zu dem Ring 10 hin öffnende Tasche 17 auf, die über eine Druckleitung 18 mit einer Hochdruckpumpe 19 in Verbindung steht. Der Reibbelag 16 kann z.B. als Ronde mit einer zum Außenumfang konzentrischen Tasche ausgebildet sein. Jeder Tasche 17 ist jeweils ein Strömungswiderstand 20, z.B. in der Form einer Kapillare, vorgeordnet.

Der zweite Ring 12 ist einstückig mit dem Gehäuse 4 als flanschartige Aufweitung der Gehäusewand gebildet und weist eine Stufe auf. Der dritte Ring 21 lässt sich mit dem zweiten Ring 12 verschrauben, wobei die Klemmbacken 13 und 14 mit dem Ring 10 verspannt werden. Die Dicke des Rings 10 ist im Vergleich zur Höhe der Stufe im Ring 12 so gewählt, dass Spielraum für eine solche Verspannung besteht. Einrichtungen zur radialen Verspannung der inneren Klemmbacken 15 mit dem Ring 10 sind nicht gezeigt.

Im folgenden wird die Wirkungsweise der vorangehend beschriebenen Lagerung für den Maschinenkopf 2 erläutert.

Solange im Betrieb der Windenergieanlage der Maschinenkopf nicht zwecks Anpassung an die Windrichtung um die vertikale Achse 6 zu drehen ist, halten die Klemmbacken 13 bis 15 den Maschinenkopf 2 in der jeweiligen Drehstellung durch Reibung am Turm 1 fest. Relativbewegungen zwischen dem Turm 1 und dem Maschinenkopf 2 infolge sich ändernder Windkräfte unterbleiben. So kommt es weder zum Verschleiß der Lagerung des Maschinenkopfs noch der miteinander in Eingriff stehenden Zahnungen der Antriebseinrichtung und des Rings 10.

Muss der Kopf 2 zur Anpassung der Lage des Windrotors 3 an die Windrichtung gedreht werden, so wird den Taschen 17 mit Hilfe der Hochdruckpumpe 19 über die Druckleitungen 18 Öl als Druckmedium zugeführt, In den Taschen 17 baut sich gegen die Klemmkraft der Klemmbacken ein so hoher Druck auf, dass das Öl zwischen den Klemmflächen der Reibbeläge 16 und der betreffenden Oberfläche des Rings 10 nach außen tritt, wobei zwischen diesen Flächen ein die Reibung weitgehend aufhebender Ölfilm 22 der Dicke h entsteht. Die Trennung der Klemmflächen durch den Ölfilm 22 sorgt für völlige Verschleißfreiheit der Lagerung des Maschinenkopfes 2 auf dem Turm 1.

Der Ring 10 und die Klemmbacken 13 bis 15 bilden ein leichtgängiges, den Maschinenkopf 2 axial und radial führendes hydrostatisches Gleitlager, auf dem die (nicht gezeigte) in die Außenzahnung 11 des Rings 10 eingreifende Antriebseinrichtung die Rotor-/Generatorbaugruppe leicht drehen kann. Während der Drehung am Umfangsrand der Reibbeläge 16 austretendes Öl gelangt über nicht gezeigte Auffangrinnen und Leitungen in einem Kreislauf in die Hochdruckpumpe 19 zurück.

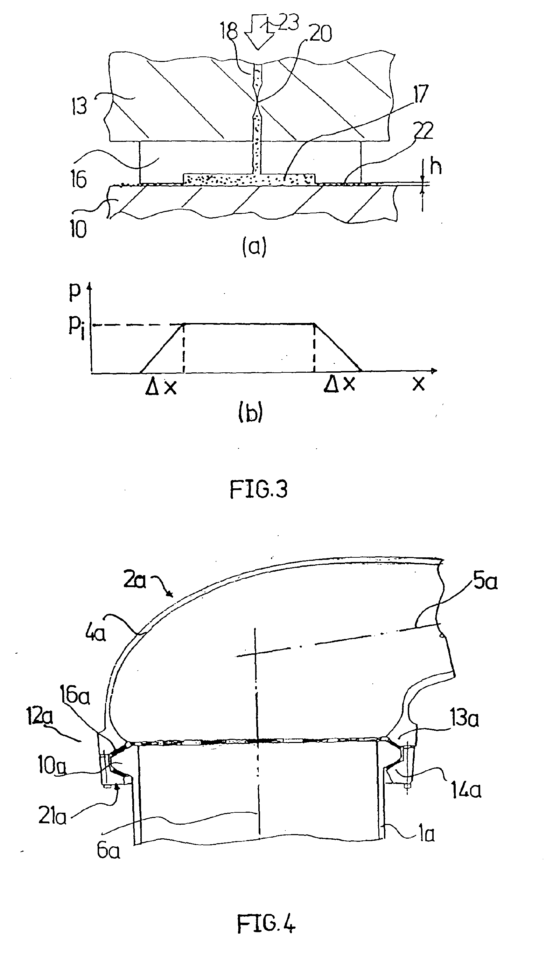

Infolge der am Maschinenkopf angreifenden Kippmomente sind die über den Umfang des Rings 10 verteilten Klemmbacken 13 bis 15 unterschiedlich belastet, wobei es insbesondere zu kurzfristigen Belastungsschwankungen durch Windböen kommen kann. Steigt die Belastung eines Reibbelags 16 gemäß Pfeil 23 (Fig. 3) an, so verringert sich die Spaltfläche h und entsprechend die Dicke des Ölfilms 22 zwischen Reibbelag 16 und Ring 10. Damit erhöht sich der Strömungswiderstand zwischen der Tasche 17 und der Außenumgebung und mit ihm der Anteil an dem durch die Hochdruckpumpe 19 erzeugten Öldruck, welcher zwischen der Tasche und der Außenumgebung abfällt. Der Druckabfall über dem vorgeordneten Strömungswiderstand 20 verringert sich entsprechend. In der Tasche 17 sowie zwischen dem Reibbelag 16 und dem Ring 10 stellt sich ein erhöhter Druck ein, der der erhöhten Belastung gemäß Pfeil 23 entspricht. Der Erhöhung des Drucks entspricht eine vergleichsweise geringe Abnahme der Spalthöhe h, so dass trotz Druckschwankungen stets ein ausreichend dicker Ölfilm zwischen Reibbelag 16 und Ring 10 verbleibt.

Wie das Diagramm von Fig. 3b zeigt, fällt der Innendruck pi in der Tasche 17 entlang den Durchmesserabschnitten Δx des nach außen strömenden Ölfilms 22 auf den Wert 0 bzw. den Außendruck ab.

In den weiteren Fig. 4 bis 8 sind gleiche oder gleichwirkende Teile jeweils mit gleichen. Bezugszahlen wie in den vorangehenden Figuren bezeichnet, wobei den betreffenden Bezugszahlen von Figur zu Figur fortlaufend der Buchstabe a, b usw. beigefügt ist.

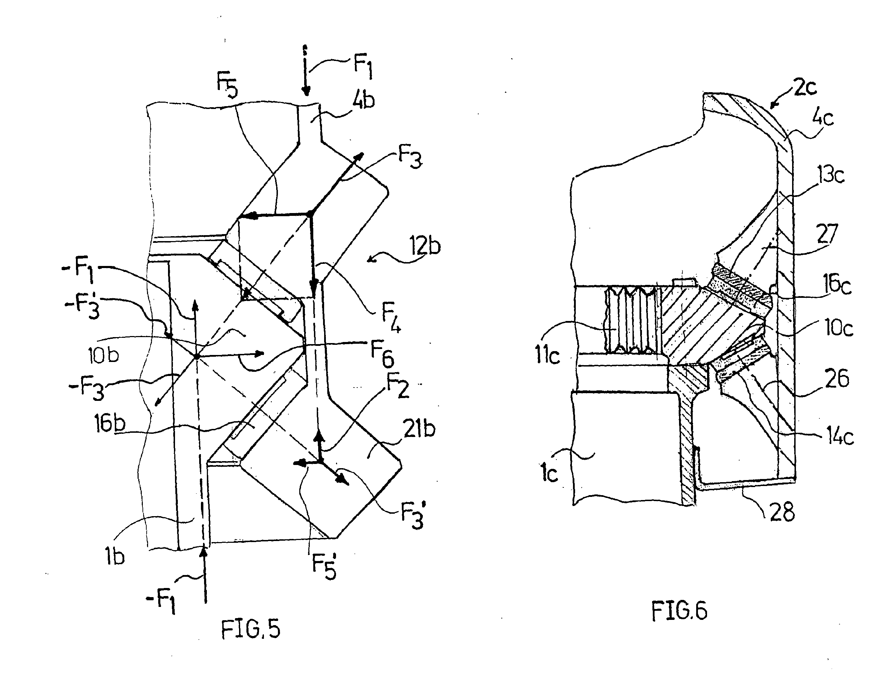

Das Ausführungsbeispiel von Fig. 4 unterscheidet sich von dem Ausführungsbeispiel von Fig. 1 bis 3 dadurch, dass Klemm- bzw. Gleitlagerflächen eines mit einem Turm 1a verbundenen Rings 10a nicht zueinander parallel sondern zueinander geneigt und konisch sind. Durch diese Maßnahme lässt sich bei verringerter Zahl von Klemmbacken eine sowohl axiale als auch radiale Führung des Maschinenkopfes erreichen. Ferner wird gesichert, dass der Ring 10a, ein am Gehäuse 4a eines Maschinenkopfs 2a gebildeter zweiter Ring 12a und ein mit ihm verschraubbarer dritter Ring 21 a nicht durch angreifende Kippmomente so verformt und verdreht werden, dass die Taschen der hydrostatischen Lagerung einseitig abheben können. Die wird anhand von Fig. 5 näher erläutert.

Wählt man die Form des Ringquerschnitts eines zweiten Rings 12b, wie dies in Fig. 5 dargestellt ist, so ergibt sich unter der Voraussetzung, dass die hydrostatisch entlasteten Klemm- bzw. Lagerteile sich reibungsfrei auf einem turmseitigen, konischen Ring 10b bewegen können, ein Kräftegleichgewicht, das ein Verbiegen und Verdrehen der einzelnen Ringe 10b, 12b und 21 b verhindert. Die beiden geschlossenen Ringe 12b,21 b stehen bei Aufweitung durch das Druckfluid unter Zugspannung, und der Ring 10b wird radial zusammengedrückt. So zwingt z.B. eine vertikale äußere Kraft F₁, die zusammen mit einer Vorspannkraft F₂, welche z.B. gemäß Fig. 4 durch Schrauben erzeugt wird, eine Kraft F₄ bildet, den oberen Ring 12b auf dem Turmring 10b an dessen Konusfläche nach außen, so dass eine Spannrückstellkraft F₅ erzeugt wird. Die Vektorsumme aus F₄ und F₅ steht im Gleichgewicht mit der hydraulischen Taschenkraft F₃. Die Kräfte F₃, F₄ und F₅ schneiden sich im Schwerpunkt der Querschnittsfläche des Rings 12b, so dass unabhängig von F₁ der Ring 12b nicht verdreht wird. Die Spannkraft F₂ sorgt für eine Spannrückstellkraft F₅', wobei F₂ und F₅' im Kräftegleichgewicht mit der am Ring 21 wirksamen Taschenkraft F₃' stehen und die drei Kräfte sich im Schwerpunkt der Querschnittsfläche 21b schneiden. Wie durch Strichlinien angedeutet ist, treffen sich auch die Wirkungslinien der Kräfte F₃ und F₃' im Schwerpunkt der Querschnittsfläche des Rings 10b. Zusammen mit einer Spannrückstellkraft F₆ des Ringes 10b herrscht hier ein Gleichgewicht der Kräfte F₆, -F₁, -F₃ und F₃', so dass auch eine Verdrehung des Ringes 10b unter jeder Last F₁ vermieden wird.

Bei dem Ausführungsbeispiel von Fig. 6 weist ein Gehäuse 4c eines Maschinenkopfs 2c keinen Ring, sondern von dem Gehäuse vorstehende Fußteile 26 und 27 für die Bildung von Klemmbacken 13c und 14c auf, die über den Umfang eines Rings 10c verteilt sind. Die Fußteile 26,27 können lösbar mit dem Gehäuse 4c verbunden sein, was einen Austausch einzelner Klemmbacken und damit die Wartung der Lagervorrichtung erleichtert.

Ein mit dem Turm 1c verbundener Ring 10c ist auf seiner Innenseite mit einer Zahnung 11c versehen, welcher dieselbe Funktion wie der Außenzahnung 11 des Ausführungsbeispiels von Fig. 2 zukommt. Bei dieser Bauform werden Verformungseigenschaften wie bei dem Ausführungsbeispiel von Fig. 5 erreicht, wobei die Gehäusewand 4c die Funktion der Ringe 12b und 21b übernimmt.

Das Bezugszeichen 28 in Fig. 6 weist auf eine Rinne zum Auffangen in die Hochdruckpumpe rückzuführenden Öls hin.

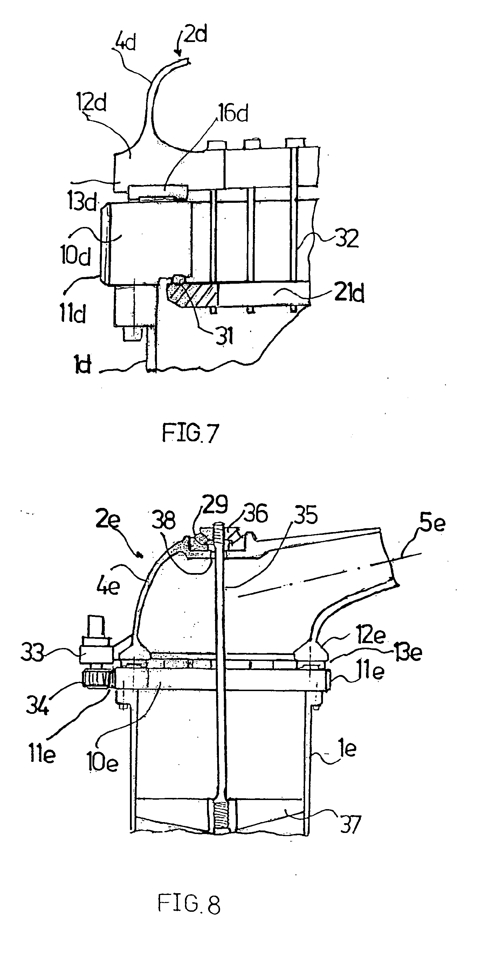

Fig. 7 zeigt ein Ausführungsbeispiel, bei dem ein Umgriff für einen Ring 10d durch einen Ring 21 d gebildet ist, der über Wälzkörper 31 auf dem Ring 10d drehbar und durch Schrauben 32, die mit einem Ring 12d am Gehäuse 4d verbunden sind, vorgespannt ist.

Bei dem Ausführungsbeispiel von Fig. 8 sind nur auf der Oberseite eines Rings 10e Klemmbacken 13e vorgesehen, und ein Gehäuse 4e eines Maschinenkopfes 2e ist auf dem Ring 10e durch einen Bolzen 35 gespannt, welcher sich zwischen einer innerhalb des Turms 1e angeordneten Traverse 37 und einer den Bolzen 35 spannenden Mutter 36 erstreckt, welche eine Öffnung 38 im Trägergehäuse 4e hintergreift. Die Mutter 36 ist über Wälzkörper 29 um die vertikale Drehachse des Maschinenkopfes 2e drehbar am Gehäuse 4e des Maschinenkopfs 2e gelagert.

Mit 33 ist in Fig. 8 eine mit dem Gehäuse 4e verbundene Antriebseinrichtung mit einem Motor und einem Zahnrad 34 bezeichnet, welches in eine Außenzahnung 11e eines Rings 10e eingreift.

## Patentansprüche

1. Vorrichtung zur Lagerung des Maschinenkopfes einer Windenergieanlage auf dem Trägerturm, mit einem auf dem Turm (1) angeordneten Lager (9), auf dem der den Rotor (3) aufweisende Maschinenkopf (2) um eine vertikale Achse (6) drehbar ist, und mit einer Klemmeinrichtung zur Arretierung des Maschinenkopfes (2) am Trägerturm (1) in einer gewünschten Drehposition,
**gekennzeichnet durch** in der Art einer hydrostatischen Lagerung gebildete Einrichtungen mit einer Hochdruckpumpe für die Erzeugung eines Druckfluidfilms (22) zwischen den Klemmflächen der Klemmeinrichtung.

2. Vorrichtung nach Anspruch 1,
**dadurch gekennzeichnet,**
**dass** die Klemmeinrichtung einen am Turm (1) oder Kopf (2) angebrachten Ring (10) und gegen den Ring (10) anliegende, mit dem Kopf (2) bzw. Turm (1) verbundene Klemmbacken (13-15) umfasst, wobei über den Umfang des Rings (10) eine Anzahl solcher Klemmbacken (13-15) verteilt ist und in den gegen den Ring (10) anliegenden Klemmflächen der Klemmbacken (13-15) über eine Druckleitung (18) mit einer Hochdruckpumpe (19) verbundene Taschen (17) gebildet sind.

3. Vorrichtung nach Anspruch 2,
**dadurch gekennzeichnet,**
**dass** mehrere oder alle Klemmbacken (13-15) jeweils über einen der Tasche (17) vorgeordneten Strömungswiderstand (20) mit einer einzigen Hochdruckpumpe (19) verbunden sind.

4. Vorrichtung nach einem der Ansprüche 1 bis 3,
**dadurch gekennzeichnet,**
**dass** die Hochdruckpumpe (19) gegen die den Maschinenkopf (2) arretierenden Klemmkräfte der Klemmeinrichtung (13-15) arbeitet und die Reibung aufhebt.

5. Vorrichtung nach einem der Ansprüche 2 bis 4,
**dadurch gekennzeichnet,**
**dass** das Lager (9) zum Teil oder ausschließlich durch den Ring (10) und die während der Drehung des Maschinenkopfs (2) hydrostatisch entlasteten Klemmbacken (13-15) gebildet ist.

6. Vorrichtung nach einem der Ansprüche 2 bis 5,
**dadurch gekennzeichnet,**
**dass** der Querschnitt der dem Ring (10) zugewandten Öffnung der Taschen (17) oder/und die Größe der Klemmflächen der Klemmbacken (13-15) über den Umfang des Rings (10) variiert/variieren.

7. Vorrichtung nach einem der Ansprüche 2 bis 6,
**dadurch gekennzeichnet,**
**dass** die Klemmflächen der Klemmbacken (13-15) jeweils durch einen, vorzugsweise mit dem übrigen Klemmbacken verklebten, Belag aus einem Material mit einem hohen Haftreibungskoeffizienten gebildet sind.

8. Vorrichtung nach einem der Ansprüche 2 bis 7,
**dadurch gekennzeichnet,**
**dass** Klemmbacken (13,15) an beiden Stirnseiten des Rings (10) zangenartig in der Art einer Scheibenbremse oder an nur einer Stirnseite des Rings (10e) angreifen.

9. Vorrichtung nach Anspruch 8,
**dadurch gekennzeichnet,**
**dass** die Klemmbacken zangenartig an konischen Flächen des Rings (10b; 10c) angreifen.

10. Vorrichtung nach einem der Ansprüche 1 bis 9,
**dadurch gekennzeichnet,**
**dass** zur Bildung der Klemmbacken ein mit dem Maschinenkopf (2) oder Turm verbundener zweiter Ring (12), an dem zweiten Ring (12) die Klemmflächen bildende Beläge (16) und eine den zweiten Ring (12) über die Beläge (16) axial gegen den ersten Ring (10) drückende Spanneinrichtung vorgesehen sind.

11. Vorrichtung nach Anspruch 10,
**dadurch gekennzeichnet,**
**dass** der zweite Ring (12) einstückig mit einem tragenden Gehäuse (4) des Maschinenkopfs (2) verbunden ist.

12. Vorrichtung nach Anspruch 10 oder 11,
**dadurch gekennzeichnet,**
**dass** auf der dem zweiten Ring (12) abgewandten Seite des ersten Rings (10) ein dritter, durch die Spanneinrichtung gegen den ersten Ring (10) gedrückter, ggf. segmentierter, Ring (21) angeordnet ist.

13. Vorrichtung nach Anspruch 12,
**dadurch gekennzeichnet,**
**dass** der dritte Ring (21;21d) mit Belägen (16) zur Bildung von Klemmbacken (15) versehen ist oder Einrichtungen (31) zur Drehlagerung auf dem ersten Ring (10d) aufweist.

14. Vorrichtung nach Anspruch 12 oder 13,
**dadurch gekennzeichnet,**
**dass** Querschnitte und Lage dreier konischer Ringe (10b, 12b, 21b) so gewählt sind, dass sich Axialkräfte und radiale Ringspannkräfte sowie die hydraulischen Kräfte der hydrostatischen Lagerung jeweils im Flächenschwerpunkt der Ringquerschnitte schneiden.

15. Vorrichtung nach einem der Ansprüche 9 bis 14,
**dadurch gekennzeichnet,**
**dass** die Spanneinrichtung den zweiten und dritten Ring (12;21;21b) verbindende Schrauben (32) oder ein den Maschinenkopf (2e) und den Turm (1e) zusammenziehendes, am Maschinenkopf oder Turm um die Drehachse des Maschinenkopfs drehbar gelagertes Spannglied (35) umfasst.

16. Vorrichtung nach einem der Ansprüche 1 bis 15,
**dadurch gekennzeichnet,**
**dass** von einem Gehäuse (4c) des Maschinenkopfs (2c) oder der Wand des Turms Fußteile (26,27) für die Bildung von Klemmbacken (13c,14c) vorstehen.

17. Vorrichtung nach Anspruch 16,
**dadurch gekennzeichnet,**
**dass** die Fußteile lösbar mit dem Gehäuse (4c) bzw. der Wand des Turms verbunden sind.

18. Vorrichtung nach einem der Ansprüche 1 bis 17,
**dadurch gekennzeichnet,**
**dass** eine, vorzugsweise ringförmige, Rinne (28) zum Auffangen von in einem Kreislauf umlaufenden Druckmedium vorgesehen ist.

19. Vorrichtung nach einem der Ansprüche 1 bis 18,
**dadurch gekennzeichnet,**
**dass** das durch die Hochdruckpumpe geförderte Druckmedium ferner zur Schmierung eines Drehantriebs (11;33,34) für den Maschinenkopf (2) vorgesehen ist.
